# EUROPEAN PATENT APPLICATION

(11) **EP 2 546 556 A1**
(43) Date of publication of application: **16.01.2013**
(21) Application number: 11752887.7
(22) Date of filing: 10.03.2011
(51) Int. Cl.: F16J 13/08, F17C 13/06

(54) **HERMETIC SEALING SYSTEM FOR CONTAINERS**

(30) Priority: 12.03.2010 ES 201030362
(71) Applicant: Forpogui, S.L., 43500 Tortosa (ES)
(72) Inventor: GUINART PALLARES, José Ramon, E-43520 Roquetes - Tarragona (ES); POY BARBERA, Alejandro, E-43520 Roquetes - Tarragona (ES)
(74) Representative: Gallego Jiménez, José Fernando
(86) International application number: PCT/ES2011/000070
(87) International publication number: WO 2011/110707

(57) **Abstract**

The invention relates to a system that includes a lid (1) that moves in a plane parallel to the mouth (2) of the container, a means of activating (5) the lid (1) between the open and close positions, and a pneumatic seal (10) that acts on the surfaces opposite the lid (1), and the mouth (2) in the closed position. The mouth (2) has a ring (6) that protrudes laterally from the mouth (2). The ring (6) and the lid (1) are equipped with an upper latch (7) and a lower latch (8) to hold the lid (1) in the closed position. The pneumatic seal (10) has an elastic protective cover (11) and the means of activating the lid (1) are linked to a remote control device (12).

## Description

### Object of the invention.

The present invention relates to a hermetic sealing system for fixed or unfixed containers for all types of products, in which pressure may or may not intervene. The tubular configuration of the container coupling flange, allows exchanging this system for those currently used in containers. The modular design of each element permits the exchange of coupling means required for each type of mouth depending on the product being handled. The fastening system of the sealing together with the pneumatic system, which ensures the tightness of the assembly, allow the effect of pressure inside the container to not affect the sealing thereof.

The possibility to remotely actuate the opening / closing of this system makes it possible to manoeuvre it without having to access the mouth, which on most containers is at their top.

### Background of the invention.

The fact that the mouths of the containers are located at the top and very often on curved metallic surfaces (frequently wet), can cause serious accidents during the loading/unloading process, since this implies that an operator must access them and manually perform the opening and closing maneuver.

Access to it, apart from the difficulty due to its height, involves the placement of an access element (stairs in most cases) that in certain circumstances is both an additional risk as well as an additional cost for the equipment.

There are currently opening and closing systems, using a large screw that is manually operated by a lever, both tighten the closing lid over the mouth, with the risk (which has caused numerous accidents) of the wear of the thread rib either by the use or by rests of filling products being deposited, causing wear on the system and its random detachment, especially in those containers to which an inner pressure is applied to discharge the product quickly and effectively.

This manual system requires the operator to maneuver on high, uneven (spherical) and sliding (moisture, product residues) surfaces, so that the force created from closing it presents a high probability of accidents.

Other known sealing systems comprise longitudinal guides on the container mouth on which a plate, forming the closing lid, moves like a guillotine.

In order to achieve certain tightness for the lid in these systems, in the longitudinal guides are arranged rubber joints that are subjected to a progressive wear due to rubbing of the lid during subsequent opening and closing movements. Furthermore, between the joints and the lid there must be a certain tolerance so said joint permits displacement of the lid, thus these systems do not ensure total sealing of the closure and are not effective in those cases in which pressure is applied inside the container during product discharge operations.

In other known sealing systems the lid has a lateral extension to be mounted on a rotation axis, causing the rotation of the lid by means of a cylinder or other actuator element, so that the lid also acts as a guillotine with a rotatory movement instead of a longitudinal one in this case.

In these systems sealing means formed by a pneumatic seal arranged between the mouth and the lid and conforming a pneumatic sealing are used. Obviously, this pneumatic joint or seal provides greater tightness than typical rubber gaskets, by exerting a pressure against the mouth of the container and the surface facing the lid.

In the cited background, the lid requires a certain clearance for opening and closing, which determines a certain mobility of the lid when using a static rubber gasket and a lack of tightness in the sealing and, in case of using a pneumatic seal, force must be transmitted to the lid and its guide means, which causes misalignment of the lid.

### Description of the invention.

The hermetic sealing system for containers, object of the invention, of the type comprising a lid that moves in a plane parallel to the mouth of the container, means of activating the lid between the open and closed positions, and a pneumatic seal which acts on the surfaces opposite the lid and the mouth in the closed position, presents constructive features aimed at securing the lid, in the closed position, with respect to the mouth, preventing its perpendicular movement with respect to the plane of the mouth, ensuring proper sealing of the closure by the pneumatic seal.

Another objective of the invention is to allow remote control of the means for activating the lid, in order to facilitate opening and closing actions by the user and to prevent accident risks involving user access to the top area of the container due to manually carrying out the opening and closing manoeuvres.

To this end, according to the invention, the mouth of the container has at its upper end a ring which protrudes at least the contour perimeter of the mouth and which forms an actuating surface for the pneumatic seal in the closed position of the lid, said ring comprising an upper latch covering a portion of its length and simultaneously forming a stop and holding means for the front side of the lid when in the closed position.

This upper latch is supplemented with a fixed lower latch on the front side of the lid and simultaneously forms a stop and holding means for the rear area of the ring corresponding to the mouth of the container when said lid reaches the closed position of the mouth.

The alternating upper and lower arrangement of the latches corresponding to both the ring and the rear area of the lid, using as a reference the advancement direction of the lid to the closed position, determines that in the closed position the lid is securely attached to the ring on the mouth and unable to move in a perpendicular direction to the plane of closure, thus ensuring correct operation of the pneumatic seal and perfect tightness of the closure.

According to the invention the pneumatic seal is arranged within a channel defined for either the lid or the mouth ring, which is externally closed by a protective covering in flexible material in order to prevent rubbing of the pneumatic seal against the mouth ring or the lid respectively and consequently to prevent an accelerated deterioration of said pneumatic seal.

In one embodiment of the invention the protective cover presents a "U"-like section, the wings of which are housed in the channel and arranged between the side walls of the channel and the pneumatic seal, and whose core outwardly overlies the pneumatic seal.

Another feature of the invention consists in incorporating a remote control device into the system, for the remote control of the means for activating the sealing lid in order to prevent the user having to climb onto the container reservoir in order to manually open or close the lid, with the consequent risk of accident.

According to the invention, the upper latch fixed to the front area of the ring has front through holes for evacuating any particles accumulated on the ring when the lid is in the open position to the outside. Thus during the closing operation, the lid moves the particles accumulated on the ring toward said upper latch, evacuating them through the holes defined in said upper latch, and preventing said particles from progressively accumulating between the front end of the lid and the upper latch attached at the front end of the ring, which may even prevent the lid from reaching the closed position.

In one embodiment of the invention the lid has nozzles or blowers at its front end, which are connected to a circuit supplying pressurized air. During the closing operation, said nozzles project pressurized air over the mouth ring, removing accumulated particles from the ring in order to prevent them from accumulating between the front end of the lid and the upper latch becoming an impediment to the smooth closing of the lid.

According to the invention, the sealing system comprises an anti-trap safety system in order to prevent damage in the case of trapping of an operator or any other object situated at the mouth of the container during the closing operation of the lid.

Said safety device may be a pressure sensor arranged on the front area of the lid, suitable means for detecting overpressure on the means for activating the lid, or other equivalent means.

Finally, it should be mentioned that the remote control device may be electrical, mechanical, hydraulic or pneumatic depending on the type of activating means used to move the lid.

### Description of figures.

In order to complement the description that is being carried out and with the purpose of facilitating the understanding of the characteristics of the invention, the present description is accompanied by a set of drawings wherein, by way of a nonlimiting example, the following has been represented:
- Figure 1 shows a perspective view of an embodiment of the sealing system with the lid in the closed position, said lid being rotationally activated by a pneumatic cylinder.
- Figure 2 shows a view similar to the previous one with the lid in the open position.
- Figure 3 shows a transparent view plan of the sealing system to allow for visualisation of the area of action of the cylinder on the lid.
- Figure 4 corresponds to section A-A of the sealing system referenced in the preceding figure.
- Figure 5 shows a section of a portion of the lid showing the configuration and arrangement of the protective cover of the pneumatic seal with regards to the channel housing of said pneumatic seal.
- Figure 6 shows an elevation view of the sealing system mounted in position for use on a container, namely a drum or a tank, which is only partially shown.
- Figure 7 shows an embodiment of the means for activating the lid, provided with an anti-trap safety device.

### Preferred embodiment of the invention.

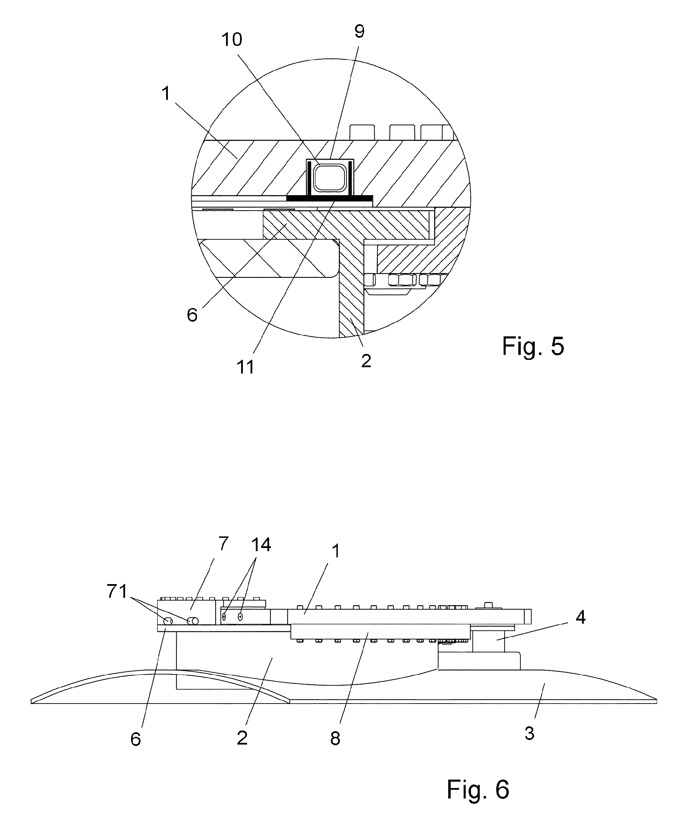

In the embodiment shown in the accompanying figures, the hermetic sealing system for containers comprises a lid (1) that moves in a plane parallel to the mouth (2) of a container (3), partially shown in Figure 5.

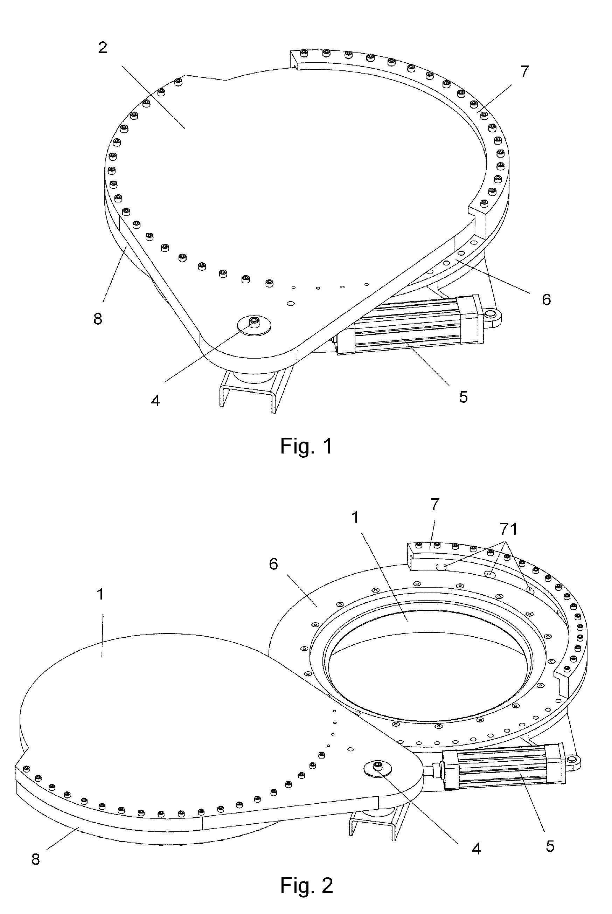

The lid (1) is mounted on a vertical axis (4) of rotation and is moved between open and closed positions shown in Figures 1 and 2 by actuation means, in this case represented by a pneumatic cylinder (5).

The mouth (2) has a ring (6) at its upper end that protrudes laterally from the contour of the mouth (2) and that forms a surface for the action of the pneumatic seal (10) in the closed position of the lid.

The ring (6) comprises an upper latch (7) with an "L"-like section, which covers a portion of its length and forms a stop and holding means of the front area of the lid (1), when the lid reaches the closed position shown in Figure 1.

The lid (1) comprises a lower latch (8) at its rear area, with an "L"-like section, which simultaneously forms a stop and holding means for the ring (6) when said lid reaches the closed position shown in Figure 1.

In this closed position the upper (7) and lower (8) latches ensure the position of the lid (1) relative to the ring (6) of the mouth (1), preventing its vertical displacement.

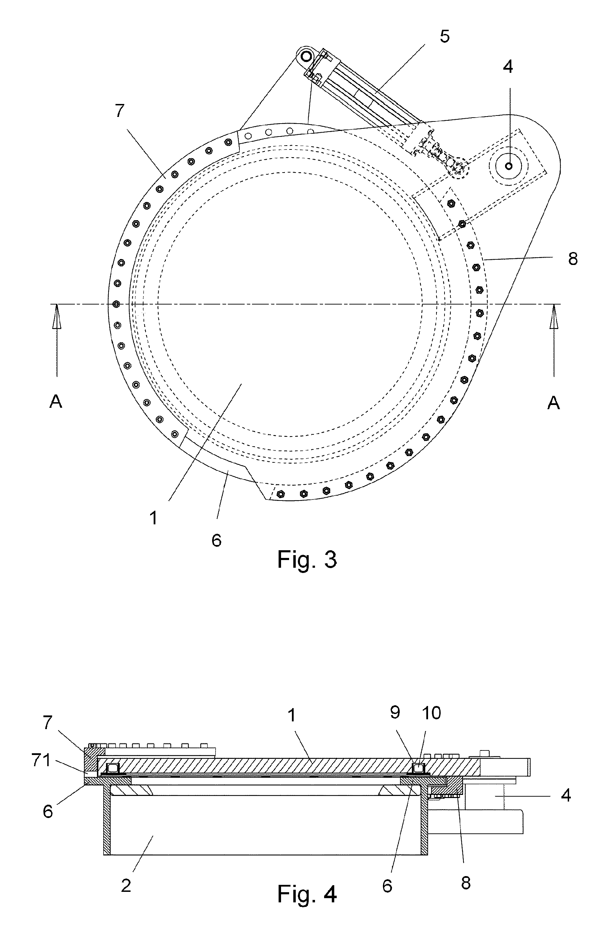

In the embodiment shown in Figures 4 and 5, the lid (1) presents a ring channel (9) at its inner surface in which a pneumatic seal (10) provided for hermetically sealing the lid (1) with respect to the mouth (1) and more particularly relative to the ring (6) of the mouth (1) is housed.

Said channel (9) is closed externally by a protective cover (11) in flexible material that prevents rubbing of the pneumatic seal (10) against the ring (6) and thus the accelerated deterioration of said the pneumatic seal (10).

In the example shown in Figure 5, the protective cover (11) has a "U" section, whose wings are housed in the channel (9) and whose core externally covers the pneumatic seal (10).

The sealing system has a remote control device (12), for the remote control of the pneumatic cylinder during the opening and closing operations.

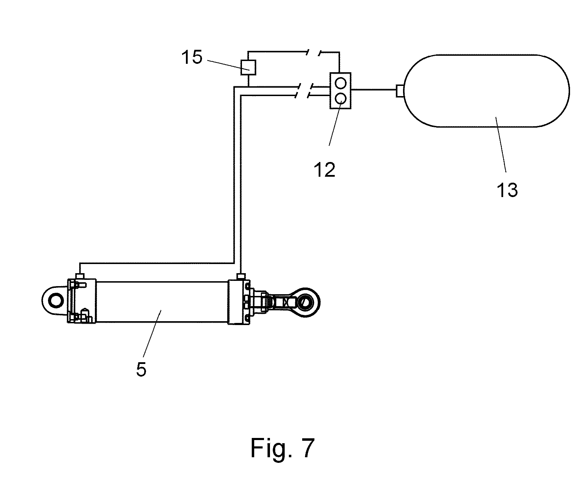

As mentioned above, said remote control device may be of different types depending on the actuator means employed for activating the lid. In this specific case, the remote control device, represented in Figure 7, comprises solenoid valves (12), operable by a manual or remote control, arranged between equipment (13) for supplying pneumatic pressurized fluid and pressurized inlet and outlet openings of the pneumatic cylinder (5), for the opening and closing operations.

As can be seen in Figures 2 and 4, the upper latch (7) has front through holes (71) for evacuating any particles accumulated on said ring (6) during the closing operation of the lid to the outside, thus preventing these particles from being caught between the front end of the lid (1) and the upper latch (7), which may impede the sealing of the lid (1).

With this same purpose, in the embodiment shown in Figure 6, the lid (1) has on its front end nozzles or blowers (14) which project air over the ring (6) during the closing operation, eliminating any accumulated particles on the ring (6). In a preferred embodiment these nozzles or blowers (14) are connected to a branch of the pneumatic circuit for supplying pneumatic pressure to the cylinder (5) during the closing operation.

In the embodiment shown in Figure 7, the sealing system has an anti-trap safety device represented by a pressure switch (15) connected to the pneumatic circuit for supplying the cylinder (5), automatically causing the arrest of the closing of the lid (1) in the case of detecting an overpressure higher than the pressure required to close the lid, in said circuit.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are subsequently claimed.

## Claims

1. Hermetic sealing system for containers of the type comprising a lid (1) that moves in a plane parallel to the mouth (2) of the container, means (5) for activating the movement of the lid (1) between an open position and a closed position, and a pneumatic seal (10) acting against the facing surface of the lid (1) and the mouth (2) when said lid (1) is in the closed position; **characterized in that:**
the mouth (2) has a ring (6) at its upper end that protrudes laterally from the contour of the mouth (2) and that forms a surface for the action of the pneumatic seal (10) in the closed position of the lid (1),
the ring (6) comprises an upper latch (7), which covers a portion of its length and forms a stop and holding means of the front area of the lid (1) in the closed position of the lid (1),
the lid (1) comprises at its front area, a lower latch (8) which forms a stop and holding means for the ring (6) when said lid reaches the closed position, preventing in combination with the upper latch the displacement of the lid perpendicular to the closing plane and,
the lid (1) has a ring channel (9) for receiving the pneumatic seal (10), whose channel is externally closed by a protective cover (11) in flexible material for preventing the rubbing of the pneumatic seal (10) against the ring (6).

2. System according to claim 1, **characterized in that** the means for activating the lid (1) are associated with a remote control device (12) for its activation during the opening and closing operations.

3. System according to any of the preceding claims **characterized in that** the protective cover (11) has an "U" section, whose wings are housed in the channel (9) and whose core externally covers the pneumatic seal (10).

4. System according to any of the preceding claims, **characterized in that** the upper latch (7) has front through holes (71) for evacuation to the outside, during the closing of the lid, of any particles accumulated on the ring (6).

5. System according to any of the preceding claims, **characterized in that** the lid (1) has at its front end nozzles or blowers (14), connected to a pressurized air supply circuit and which project pressurized air over the ring (6) during the closing of the lid for removing any accumulated particles on the ring (6).

6. System according to any of the preceding claims **characterized in that** it comprises an anti-trap safety device for stopping the closing operation of the lid in the case of trapping of an operator or object located at the mouth of the container during the closing of the lid.
